# EUROPÄISCHE PATENTANMELDUNG

(11) **EP 1 920 686 A2**
(43) Veröffentlichungstag der Anmeldung: **14.05.2008**
(21) Anmeldenummer: 07021914.2
(22) Anmeldetag: 12.11.2007
(51) Int. Cl.: A47J 31/46, A47J 31/54, F16L 37/14, F16L 37/088

(54) **Fluidleitungsverbindungsanordnung**

(30) Priorität: 10.11.2006 DE 202006017177 U
(71) Anmelder: Eugster/Frismag AG, 8590 Romanshorn (CH)
(72) Erfinder: Fischer, Daniel, 8590 Romanshorn (CH)
(74) Vertreter: Schubert, Siegmar

(57) **Zusammenfassung**

In einer Fluidleitungsverbindungsanordnung weist ein Verbindungsteil (16) zwei äußere Verbindungshülsenabschnitte (16a,16b) auf, aus denen jeweils innen eine ringförmige Schulter ausgebildet ist. Es verbindet eine erste Leitung (1) aus flexiblem Kunststoff mit einer zweiten Leitung (15). Jeweils auf einem Endabschnitt der ersten Leitung (1) und der zweiten Leitung (15) ist eine Verbindungsmuffe (5) bzw. ein ringförmiges Verbindungselement (14) form- und kraftschlüssig anliegend aufgebracht. An jedem der Verbindungshülsenabschnitte (16a,16b) kann jeweils eine Federklammer (11,17) als Arretierungselement lösbar angebracht werden, welches durch jeweils eine Schlitzaufnahme (9,18) in einem der Verbindungshülsenabschnitte (16a,16b) reicht und an der hinteren ringförmigen Stirnseite der eingesteckten Verbindungsmuffe (5) bzw. des eingesteckten Verbindungselements (14) anliegt. Um eine herstellungsgünstige, rasch montierbare fluiddichte Anordnung zu schaffen, ist aus der zweiten Leitung (15), die eine starre metallische Anschlussleitung ist, ein umlaufender Wulst (14) durch Stauch-/Rollbearbeitung ausgeformt, der bezüglich des O-Rings (8) geeignet dimensioniert ist.

## Beschreibung

Die Erfindung betrifft eine Fluidleitungsverbindungsanordnung nach dem Oberbegriff des Anspruchs 1.

In einer Fluidleitungsverbindungsanordnung nach der US-A-5 350 203 wird ein Rohr als erste Leitung mit einem Gehäuse in einer Bohrung als zweite Leitung dicht verbunden. Ein Endabschnitt des Rohrs weist im gegenseitigen Abstand zueinander ausgeformte ringförmige oder wulstförmige Erweiterungen auf, zwischen denen eine Muffe gehalten ist. Die Muffe hat an ihren Stirnseiten ringförmige Aussparungen, an denen die Erweiterungen des Rohrs anliegen können. Neben den ringförmigen Aussparungen weist die Muffe einen zylindrischen Umfangswandabschnitt auf. Das Gehäuse mit der als zweite Leitung dienenden Bohrung ist ein Formteil, in dem in Verlängerung der Bohrung eine erweiterte Bohrung ausgeformt ist, die an einer ringförmigen Schulter in die als zweite Leitung dienende Bohrung übergeht. Auf einer der Schulter gegenüber liegenden, nach außen offenen Seite ist aus dem Gehäuse ein noch stärker erweiterter, annähernd kegelstumpfförmiger hohler Abschnitt mit einer Hinterschneidung an der offenen Seite ausgeformt, die ein Halteelement aufnimmt. In einer Ausführungsform des Halteelements ist dieses mit einer scheibenförmigen, gelochten Grundseite und zwei von deren Rand abstehenden, abgewinkelten, federnden Laschen mit endseitigen Zungen ausgebildet. Das Halteelement kann sich mit seiner scheibenförmigen Grundseite an einer hinteren Stirnseite der in das Gehäuse eingeschobenen Muffe abstützen und sich mit den federnden Laschen bzw. Zungen gegenüber an der Hinterschneidung des kegelstumpfförmigen Abschnitts des Gehäuses abstützen. Ein O-Ring ist zwischen der Schulter der Bohrung in dem Gehäuse und der ihr zugewandten Stirnseite der Muffe positioniert. Sowohl diese Stirnseite als auch die wulstförmige Erweiterung des Rohrs grenzen an den O-Ring und drücken diesen gegen die Bohrung in dem Gehäuse, um die Fluidleitungsverbindungsanordnung nach außen abzudichten. Zur Montage wird vorzugsweise das Rohrende mit dem O-Ring, der Muffe und dem Halteelement in die axial offene Seite des Gehäuses eingeschoben, bis sich die federnden Laschen des Halteelements hinter der Hinterschneidung des Gehäuses aufspreizen. Zum Entfernen des Rohrendes sind die federnden Laschen mit einem Werkzeug zu greifen und aneinander zu drücken, wonach das Rohrende mit den genannten Elementen aus dem Gehäuse herausgezogen werden kann.

In einer zweiten und dritten Ausführungsform der Fluidleitungsverbindungsanordnung ist das Halteelements als Sprengring bzw. Federring ausgebildet, der eine umlaufende Nut in der Muffe weitgehend umschließt und durch Eingriff einer Zange in Löcher an den Ringenden und Zusammenziehen der Ringenden aus der Nut entfernt werden kann.

In der dritten Ausführungsform ist zusätzlich ein Dichtungsdistanzstück vorgesehen, welches durch die Stirnseite der Muffe gegen den O-Ring gedrückt wird, der wie bei der zweiten Ausführungsform in einer Vertiefung des Rohrs neben dessen wulstförmiger Erweiterung liegt.

Alle Ausführungsformen der bekannten Fluidleitungsverbindungsanordnung weisen eine verhältnismäßig komplizierte Formgebung insbesondere hinsichtlich der Aufbohrung des sogenannten Gehäuses auf, die fertigungsungünstig ist. Weiterhin ist das federnde Verbindungselement, welches die voneinander lösbaren Teile der Fluidleitungsverbindungsanordnung zusammenhalten soll, räumlich nicht kompakt, fertigungsaufwendig und im Bedarfsfall schwierig aus der Bohrung des Gehäuses zu entfernen, da dazu eine Zange in die Löcher der Zungen des Verbindungselements eingreifen muss, was in der Regel ein spezielles Werkzeug erfordert. Im wesentlichen die gleichen Nachteile hat auch das alternative Halteelement in Form eines Sprengrings bzw. Federrings, der in eine außen umlaufende Nut in der Muffe eingreift und diese weitgehend umschließt. Der Sprengring bzw. Federring kann ebenfalls nur durch Eingriff eines Werkzeugs bzw. einer Zange in Löcher an den Ringenden aus der Nut entfernt werden. Alle Ausführungsformen umfassen die auf das Rohrende aufgeschobene Muffe, die allenfalls zwischen zwei wulstförmigen Erweiterungen des Rohrendes gehalten wird und die mit einer ihrer Stirnseiten unmittelbar oder mittelbar über das Dichtungsdistanzstück den O-Ring gegen die Schulter der Bohrung in dem Gehäuse drückt, um die Abdichtung der Fluidleitungsverbindungsanordnung nach außen herzustellen. Somit dient keine wulstförmige Erweiterung als Dichtungselement, die dafür einen im Verhältnis zu dem mittleren Durchmesser des O-Rings zu kleinen Außendurchmesser aufweist.

Um eine Fluidleitungsverbindungsanordnung zu schaffen, die mit unkompliziert herstellbaren Verbindungselementen und rasch durchführbaren Verbindungsvorgängen auskommt und gleichwohl eine gute Abdichtung der miteinander verbundenen Leitungen nach außen aufweist, ist bereits eine Fluidleitungsverbindungsanordnung gemäß dem Oberbegriff des Anspruchs 1 bzw. 2 bekannt (DE-U-203 18 857, EP-A-1 538 384). Die verbundene Leitung kann hierbei unter anderem eine flexible Leitung aus Kunststoff oder ein metallisches Rohr sein. Zur Herstellung der Verbindung dient ein Verbindungsteil, welches einen zwei äußere Verbindungshülsenabschnitte verbindenden Leitungsabschnitt umfassen kann. Weiterhin ist hierzu jeweils auf einen Endabschnitt der verbundenen Leitungen eine Verbindungsmuffe montiert, die innen und außen zylindrisch als Ring ausgebildet ist. Die Verbindungsmuffe kann aus Metall bestehen, aber auch als starres Kunststoffteil gespritzt sein. In den Endabschnitt der Leitung kann ein Stützrohr eingeschoben sein, auf dem sich die Leitung bei Aufschieben der Verbindungsmuffe abstützen kann. Zum lösbaren Verbinden jeder der beiden Leitungen ist ein Arretierungselement in Form einer Federklammer vorgesehen, die durch innen seitlich offenen Schlitzaufnahmen in die Verbindungshülse reicht und an einer hinteren ringförmigen Stirnseite der eingesteckten Verbindungsmuffe zur Anlage gelangt. Die Schlitzaufnahmen der Verbindungshülse kann nicht nur innen, sondern auch außen seitlich offen sein, was eine unkomplizierte Fertigung der Verbindungshülse und einfache Handhabung der Federklammer ermöglicht. Die Verbindungshülse kann statt dessen außen seitlich geschlossen sein, so dass die Federklammer weitgehend in den Schlitzaufnahmen verschwindet. Zur zuverlässigen Abdichtung nach außen ist jeweils ein O-Ring zwischen einer ringförmigen Schulter der Verbindungshülse und der vorderen ringförmigen Stirnseite der Verbindungsmuffe eingeschlossen.

Zum sicheren form- und kraftschlüssigen Aufbringen der Verbindungsmuffe auf dem Endabschnitt eines Schlauchs, der eine zu verbindende Leitung darstellt, kann die Verbindungsmuffe aus einem ringförmigen Außenschlauchabschnitt aus einem laserstrahldurchlässigen, insbesondere thermoplastischen Kunststoff und einem mit diesem koextrudierten ringförmigen Innenschlauchabschnitt aus einem laserstrahlabsorbierenden schweißbarem, insbesondre thermoplastischen Kunststoff bestehen (DE 20 2004 020 093.7). Eine solche Verbindungsmuffe wird auf den Endabschnitt der Leitung aus schweißbarem, insbesondere thermoplastischem Kunststoff gelasert. Ein Stützrohr ist zu einem sicheren form- und kraftschlüssigem Aufbringen der Verbindungsmuffe auf dem Endabschnitt des Schlauchs nicht erforderlich, da bei der Montage der Verbindungsmuffe auf dem Endabschnitt des Schlauchs keine nennenswerten Kräfte ausgeübt werden, die ihn deformieren könnten. Vielmehr braucht die vorgefertigte ringförmige Verbindungsmuffe auf dem Schlauch nur provisorisch genauen zu werden, bevor sie mit diesem durch Lasern zuverlässig verbunden wird.

Die vorliegende Erfindung beruht auf der besonderen Problematik, flexible Schlauchleitungen mit starren metallischen Anschlussleitungen von Durchlauferhitzern in Kaffee- und Espressomaschinen druck- und flüssigkeitsdicht lösbar zu verbinden, wobei den unterschiedlichen Materialien, dem hohen Druck und der hohen Temperatur sowohl des metallischen Durchlauferhitzers als auch des durch die Fluidleitungsverbindungsanordnung geleiteten erhitzten Brühwassers Rechnung zu tragen ist. Hinzu kommt die gewünschte leichte Montierbarkeit und - im Servicefall - Demontierbarkeit der Fluidleitungsverbindungsanordnung.

In der Praxis wurden bisher für die Verbindung zwischen der flexiblen Schlauchleitung und dem metallischen Anschlussrohr bzw. der starren metallischen Anschlussleitung des Durchlauferhitzers metallische Schraub-/Quetschverbindungen verwendet, bei denen sich ein innerhalb einer Überwurfmutter liegender Metallring durch den Schraubdruck der Überwurfmutter in die metallische Anschlussleitung des Durchlauferhitzers kerbt und damit verankert. Nachteilig ist bei dieser Verbindung unter anderem der Fertigungsaufwand für die Überwurfmuttern mit Metallring und der Montageaufwand bei der Herstellung der Verbindung.

Der vorliegenden Erfindung liegt daher die Aufgabe zugrunde, eine unkomplizierte, rasch montierbare Fluidleitungsverbindungsanordnung zu schaffen, die im Bedarfsfall mehrfach gelöst und zuverlässig dicht zusammengesetzt werden kann und speziell zur Verbindung von druck- und flüssigkeitsdichten flexiblen Schlauchleitungen mit starren metallischen Anschlussleitungen von Durchlauferhitzern in Kaffee- und Espressomaschinen vorgesehen ist.

Eine Lösung dieser Aufgabe steiit die Fluidleitungsverbindungsanordnung mit einer Kombination der Merkmale des Anspruchs 1 dar.

Eine zweite Lösung der Aufgabe besteht in einer Kombination der Merkmale der Fluidleitungsverbindungsanordnung nach Anspruch 2.

Beide Lösungen beruhen auf einer Fluidleitungsverbindungsanordnung mit einem Verbindungsglied, welches zwei äußere Verbindungshülsenabschnitte aufweist, aus denen jeweils innen eine ringförmige Schulter ausgebildet ist und welches eine erste Leitung aus flexiblem Kunststoff mit einer zweiten Leitung verbindet, wobei jeweils auf einem durchgehend zylindrischen Endabschnitt der ersten Leitung und der zweiten Leitung in einem Abstand von einem Ende der ersten Leitung bzw. der zweiten Leitung eine Verbindungsmuffe, die innen durchgehend zylindrisch ist und eine vordere ringförmige Stirnseite sowie eine hintere ringförmige Stirnseite aufweist, wobei an jedem der Verbindungshülsenabschnitte jeweils eine Federklammer als Arretierungselement lösbar anbringbar ist, welches durch jeweils innen seitlich offene Schlitzaufnahmen in einem der Verbindungshülsenabschnitte reicht und an der hinteren ringförmigen Stirnseite einer der in einen der Verbindungshülsenabschnitte eingesteckten Verbindungsmuffen anliegt, und wobei jeweils eine vordere ringförmige Stirnseite des Verbindungsmuffenabschnitts mittelbar oder unmittelbar an der ringförmigen Schulter einer der Verbindungshülseabschnitte anliegt, wobei jeweils ein O-Ring zwischen der ringförmigen Schulter jedes der Verbindungshülsenabschnitte und der vorderen ringförmigen Stirnseite einer der Verbindungsmuffen eingeschlossen ist. Die zweite Leitung ist dabei eine starre metallische Anschlussleitung eines Durchlauferhitzers, auf die eine metallische Verbindungsmuffe aufgelötet ist.

Bei der ersten Lösung besteht weiterhin ein Kombinationsmerkmal darin, dass - wie an sich bekannt - die Verbindungsmuffe der ersten Leitung aus flexiblem Kunststoff einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst und dass die Verbindungsmuffe auf den Endabschnitt der ersten Leitung aus schweißbarem, insbesondere thermoplastischem Kunststoff gelasert ist.

Diese Lösung hat den Vorteil, dass in dem Endabschnitt der ersten Leitung aus flexiblem Kunststoff kein Stützrohr vorgesehen zu sein braucht, da bei der Anbringung der Verbindungsmuffe auf den Endabschnitt der ersten Leitung keine erheblichen Drücke ausgeübt werden.

Gemäß der zweiten Lösung wird statt der aufgelaserten Verbindungsmuffe aus Kunststoff eine metallische Verbindungsmuffe auf den Endabschnitt der ersten Leitung aufgequetscht, wozu in dem Endabschnitt ein Stützrohr eingeschoben ist, um eine einfache, zuverlässige und dichte Quetschverbindung zu gewährleisten.

Bei beiden erfindungsgemäßen Lösungen wird sowohl das Schlauchende, d.h. der Endabschnitt der ersten Leitung, mit der an ihm angebrachten Verbindungsmuffe und einem aufgesteckten O-Ring, als auch die metallische Anschlussleitung mit der auf sie aufgelöteten metallischen Verbindungsmuffe jeweils in einen der beiden äußeren Verbindungshülsenabschnitte des Verbindungsteils gesteckt und mittels einer der Federklammern, die jeweils durch die Schlitzaufnahmen in einen der Verbindungshülsenabschnitte gesteckt werden, arretiert. Im Betriebszustand der Kaffee- oder Espressomaschine, die mit dieser Fluidleitungsverbindungsanordnung ausgestattet ist, übernehmen die O-Ringe die gesicherte Abdichtungsfunktion, während die Federklammern den in den Leitungen und in dem Verbindungsteil herrschenden Druck aufnehmen.

Eine dritte Lösungsvariante geht von einer Fluidleitungsverbindungsanordnung gemäß dem Oberbegriff des Anspruchs 3 aus und umfasst die Kombination der Merkmale des Anspruchs 3.

Zu dessen Merkmalen gehört insbesondere die Gestaltung des Endabschnitts der starren metallischen Anschlussleitung eines Festteils bzw. des Durchlauferhitzers, aus dem ein umlaufender Wulst als ringförmiges Verbindungselement durch Stauch-/Rollbearbeitung einstückig mit dem Rohr ausgeformt ist.

Bei dieser besonders fertigungsgünstigen Realisierung des Verbindungselements braucht dieses also nicht gesondert vorgefertigt und auf dem Endabschnitt der Anschlussleitung rundum dicht angebracht zu werden, damit eine Leckage über den Außenumfang des Endabschnitts ausgeschlossen ist. Denn der O-Ring dichtet vor allem an der ringförmigen Kontaktzone ab, an der er unter Anpressdruck an der vorderen Stirnseite des Verbindungselements steht, sowie an einer außen gegenüberliegenden ringförmigen Kontaktzone an der ringförmigen Schulter des Verbindungshülsenabschnitts, in dem er angeordnet ist. Weiterhin ist im Vergleich zu einer Fluidleitungsverbindungsanordnung nach dem Stand der Technik mit einer auf den Endabschnitt der zweiten Leitung bzw. eines Rohrs aufgeschobenen Muffe, die auf diesem durch zwei flache wulstförmige Erweiterungen oder nur eine derartige Erweiterung des Rohrs provisorisch gehalten wird, bis der Endabschnitt in das am Ende der ersten Leitung ausgeformten Gehäuse eingesteckt ist und durch das Halteelement gehalten ist, die Montage der erfindungsgemäßen Fluidleitungsverbindungsanordnung wesentlich vereinfacht.

Bemerkenswert ist weiterhin die kompakte Ausbildung der erfindungsgemäßen Fluidleitungsverbindungsanordnung insbesondere in axialer Richtung, die durch den schmalen umlaufenden Wulst nach Anspruch 3 ermöglicht ist. Hierzu trägt auch die Federklammer bei, die in die Verbindungsmuffe zur Vollendung der Fluidleitungsverbindung einfach eingesteckt wird.

Zur nach außen fluiddichten Verbindung, die wie oben erwähnt mit der erfindungsgemäßen Ausbildung der Fluidleitungsverbindungsanordnung besonders zuverlässig erzielt werden kann, ist der Außendurchmesser des aus dem Endabschnitt der starren Anschlussleitung ausgeformten umlaufenden Wulstes gemäß Anspruch 4 mindestens so groß wie der mittlere Durchmesser des O-Rings, an dem er mit seiner vorderen Stirnseite im montierten Zustand der Fluidleitungsverbindungsanordnung anliegt, um an beiden Stirnseiten des O-Rings ringförmige Kontaktzonen bzw. Dichtzonen zu bilden. Entsprechend diesem Durchmesserverhältnis kann der O-Ring bei gegebenem umlaufenden Wulst gewählt werden.

Der zur Erzielung guter Abdichtung der Fluidleitungsverbindungsanordnung noch gut geeignete kleinste Durchmesser des umlaufenden Wulstes ist gemäß Anspruch 5 ungefähr so groß wie der mittlere Durchmesser des O-Rings, oder mit anderen Worten, der mittlere Durchmesser des O-Rings ist ungefähr gleich groß wie der Außendurchmesser der umlaufenden Nut gewählt. Dementsprechend kann der Außenumfang der Fluidleitungsverbindungsanordnung minimiert werden.

Die gemäß den Ansprüchen 3 - 5 gestaltete bzw. dimensionierte Fluidleitungsverbindungsanordnung ist daher besonders für dünne Anschlussleitungen geeignet, wie sie an Durchlauferhitzern für Kaffeemaschinen typisch sind.

Die Fluidleitungsverbindungsanordnung gemäß den Ansprüchen 3 - 5, die als so bezeichnete zweite Leitung eine metallische Anschlussleitung eines Festteils bzw. Durchlauferhitzers aufweist, aus deren Endabschnitt ein umlaufender Wulst durch Stauch-/Rollbearbeitung ausgeformt ist, kann eine erste Leitung aufnehmen, die gemäß Anspruch 6 eine Verbindungsmuffe aufweist, welche einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst, wobei die Verbindungsmuffe auf den Endabschnitt der ersten Leitung aus schweißbarem, insbesondere thermoplastischem Kunststoff gelasert ist. Dazu ist die Laserstrahlabsorption des Innenschlauchabschnitts bei der Herstellung dessen Kunststoffmaterials gezielt eingestellt.

Alternativ kann die genannte Fluidleitungsverbindungsanordnung gemäß den Ansprüchen 3-5 vielseitig auch eine erste Leitung aus flexiblem Kunststoff aufnehmen, in deren Endabschnitt nach Anspruch 7 ein Stützrohr eingeschoben ist, wobei eine metallische Verbindungsmuffe auf den Endabschnitt der ersten Leitung aufgequetscht ist.

Die Ansprüche 8-16 beinhalten weitere vorteilhafte Ausgestaltungen der Fluidleitungsverbindungsanordnung.

Eine Realisierung des die beiden Verbindungshülsenabschnitte aufweisenden Verbindungsteils als Kunststoffspritzteil gemäß Anspruch 8 ist besonders herstellungsgünstig.

Die gemäß Anspruch 9 annähernd U-förmige Federklammer mit zwei im wesentlichen parallelen, gewellten Schenkeln, deren äußere Abschnitte eine sich nach innen verjüngende Öffnung bilden, an die sich nach innen eine Leitungsaufnahmeausbuchtung anschließt, ist nicht nur herstellungsgünstig, sie kann darüber hinaus einfach ohne Werkzeug in der Fluidleitungsverbindungsanordnung montiert werden und nimmt gleichwohl betriebsmäßig den Innendruck in den Leitungen und der Fluidleitungsverbindungsanordnung zuverlässig auf. Im Bedarfsfall kann die Federklammer leicht gelöst werden. Zur Herstellung der Fluidleitungsverbindungsanordnung werden zwei solcher Federklammern eingesetzt.

Für die Schlitzaufnahmen in den Verbindungshülsenabschnitten sind zwei Ausführungen möglich: Wenn die Schlitzaufnahmen gemäß Anspruch 11 nicht nur innen, sondern auch seitlich offen sind, ermöglicht dies eine einfache Fertigung der Verbindungshülse und eine besonders einfache Handhabung der Federklammer zur Arretierung oder zum Lösen der Fluidleitungsverbindung.

Sind hingegen die Schlitzaufnahmen der Verbindungshülsenabschnitte gemäß Anspruch 10 außen seitlich geschlossen, so können die Federklammern weitgehend in ihnen verschwinden und in ihnen auch dann sicher gehalten werden, wenn auf die Federklammern so große Kräfte durch den Innendruck in den Leitungen und in der Fluidleitungsverbindung ausgeübt werden.

Die Verbindungsmuffe, wie sie jeweils für die erste Leitung aus flexiblem Kunststoff der Fluidleitungsverbindung vorgesehen ist, wird von einem koextrudierten Schlauch abgelängt, der einen Innenschlauch und einen Außenschlauch umfasst. Zweckmäßig basieren die Materialien des Außenschlauchs bzw. nach Anspruch 12 des ringförmigen Außenschlauchabschnitts und des Innenschlauchs bzw. des ringförmigen Innenschlauchabschnitts auf dem gleichen laserstrahldurchlässigen Kunststoff, wobei der Kunststoff des ringförmigen Innenschlauchabschnitts aber laserabsorbierend modifiziert ist. Dies ermöglicht eine unproblematische Koextrusion, als deren Ergebnis der Außenschlauch fest und dicht auf dem Innenschlauch sitzt.

Die Materialangaben und daraus resultierten Eigenschaften des Außenschlauchs und des Innenschlauchs des koextrudierten Kunststoffschlauchs gelten analog für den ringförmigen Außenschlauchabschnitt und ringförmigen Innenschlauchabschnitt der Verbindungsmuffe, die aus dem koextrudierten Kunststoffschlauch hergestellt werden.

Gemäß Anspruch 1 3 ist der Kunststoff des Innenschlauchs vorteilhaft einfach laserstrahlabsorbierend eingefärbt, wodurch die übrigen Materialeigenschaften des Kunststoffs nicht beeinträchtigt werden.

Besonders bewährt hat sich nach Anspruch 14 als thermoplastisches Material des Innenschlauchs ein laserstrahldurchlässiger Kunststoff, in dem Russpartikel zur Laserstrahlabsorption möglichst gleichmäßig verteilt sind.

Hierzu hat sich gemäß Anspruch 1 5 ein Gewichtsanteil der Russpartikel in dem Kunststoff des Innenschlauchs von 1 - 2 % als ausreichend herausgestellt.

Die Wandstärke des Innenschlauchs soll ausreichend sein, um eine genügende Laserstrahlabsorption für eine Verschweißung bzw. Verschmelzung mit dem Kunststoff des Schlauchs der ersten Leitung der Fluidverbindung zu gewährleisten. Gemäß Anspruch 16 ist eine Wanddicke von 0,2 - 0,3 mm ausreichend. Dabei kann der koextrudierte Schlauch überwiegend aus laserstrahldurchlässigem Kunststoff bestehen, der nicht laserstrahlabsorbierend modifiziert ist.

Drei Ausführungsbeispiele der Erfindung werden im folgenden anhand einer Zeichnung mit vier Figuren erläutert, woraus sich weitere vorteilhafte Merkmale ergeben können. Es zeigt:
- Figur 1: einen Längsschnitte durch eine erste Ausführungsform der Fluidleitungsverbindungsanordnung, die als Steckverbindung einer flexiblen Kunststoffleitung mit einer aufgelaserten Verbindungsmuffe ausgeführt ist und die mit einer starren metallischen Anschlussleitung eines Durchlauferhitzers verbunden ist,
- Figur 2: einen Längsschnitt durch eine zweite Ausführungsform der Fluidleitungsverbindungsanordnung einer flexiblen Kunststoffleitung, die eine metallische Verbindungsmuffe aufweist und die mit der starren metallischen Anschlussleitung eines Durchlauferhitzers verbunden ist,
- Figur 3: eine Explosionsdarstellung der Fluidleitungsverbindungsanordnung gemäß Figur 1, wobei die Fluidleitungsverbindungsanordnung nach Figur 2 insoweit gleich aussehen kann, und
- Figur 4: einen Längsschnitt durch eine dritte Ausführungsform der Fluidleitungsverbindungsanordnung einer flexiblen Kunststoffleitung gemäß Figur 1 sowie einer starren metallischen Anschlussleitung eines Durchlauferhitzers, in deren Endabschnitt ein umlaufender Wulst durch Stauch-/Rollbearbeitung ausgeformt ist.
Die starre metallische Anschlussleitung mit dem umlaufenden Wulst kann in einer weiteren Ausführungsform, die nicht gezeigt ist, auch mit einer flexiblen Kunststoffleitung nach Fig. 2 kombiniert werden.

In allen Figuren sind gleiche Teile mit übereinstimmenden Bezugszeichen versehen.

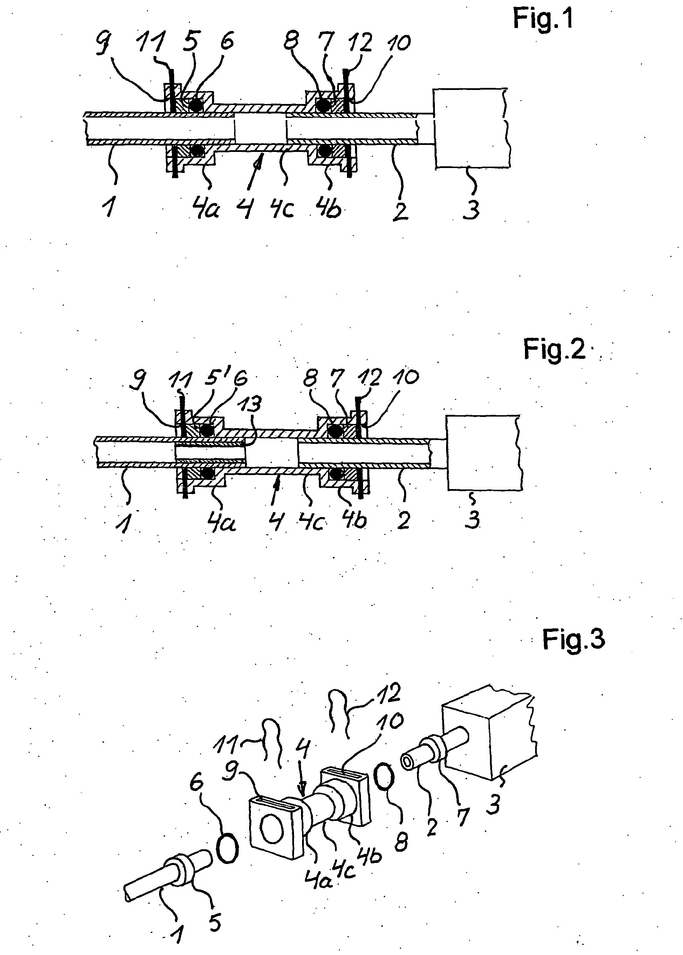

In beiden Ausführungsbeispielen der Fluidleitungsverbindungsanordnung nach den Figuren 1 - 3 wird eine flexible Kunststoffleitung als erste Leitung 1 mit einer starren metallischen Anschlussleitung als zweite Leitung 2, die Teil eines nur teilweise angedeuteten Durchlauferhitzers 3 ist, mittels eines Verbindungsteils 4 verbunden, welches zwei einander entgegengesetzten Enden offene Verbindungshülsenabschnitte 4a, 4b aufweist, die gleiche Formmerkmale aufweisen und durch einen Leitungsabschnitt 4c miteinander verbunden sind.

Auf die erste Leitung 1 ist an einem Endabschnitt kurz vor ihrem verbindungsseitigen Ende eine Verbindungsmuffe 5 aufgelasert, die der Fixierung der ersten Leitung 1 in den Verbindungshülsenabschnitt 4a des Verbindungsteils 4 dient.

Die hierzu verwendete Verbindungsmuffe 5 aus Kunststoff ist ein Abschnitt eines koextrudierten Schlauchs mit einem ringförmigen Innenschlauchabschnitt und einem ebenso ringförmigen Außenschlauchabschnitt und ist von einem solchen koextrudierten Schlauch abgelängt. Der Innenschlauchabschnitt und der Außenschlauchabschnitt sind in Figur 1 nicht getrennt dargestellt.

Die Verbindungsmuffe 5 besteht aus einem Copolymer, insbesondere Tetrafluormethylen oder Hexafluorpropylen. Das Copolymer ist normalerweise laserstrahldurchlässig und transparent. In dieser Form bildet es den ringförmigen Außenschlauchabschnitt der Verbindungsmuffe. Hingegen weist zur Laserstrahlenabsorption der Kunststoff des Innenschlauchabschnitts einen Russanteil von 1 - 2 Gewichtsprozent auf; er ist schwarz. Der Innenschlauchabschnitt ist durch die Co-Extrusion des Schlauchs mit dem Außenschlauch form- und kraftschlüssig verbunden. Der Innenschlauch ist mit einer typischen Wanddicke von 0,25 mm ausreichend dick, um nach dem Aufbringen der Verbindungsmuffe 5 auf dem Endabschnitt der ersten Leitung 1 mit vorne herausragendem Schlauchende in einem Werkzeug unter Laserstrahlabsorption genügend erwärmt zu werden und mit dem innen anliegenden Endabschnitt verschweißt zu werden. Der Außenschlauchabschnitt kann eine mehrfach größere Wandstärke als der Innenschlauchabschnitt aufweisen, um mechanisch widerstandsfähig zu sein. Beide Schlauchabschnitte der Verbindungsmuffe 5 bilden zusammen eine nicht bezeichnete ringförmige Stirnseite, an der ein O-Ring 6 als Dichtelement anliegen kann.

Auf der metallischen Anschlussleitung 2 des Durchlauferhitzers 3 wird hingegen eine Verbindungsmuffe 7 aus Metall aufgelötet und ist damit in anderer Weise form- und kraftschlüssig mit der metallischen Anschlussleitung 2 verbunden als die Verbindungsmuffe 5 aus Kunststoff mit der ersten Leitung 1.

Nach dem Aufbringen der Verbindungsmuffen 5 und 7 auf der ersten Leitung 1 bzw. der zweiten Leitung 2 kann eine Verbindung der beiden Leitungen mittels des Verbindungsteils 4 erfolgen. Hierzu werden die Enden der ersten Leitung 1 mit der Verbindungsmuffe 5 und dem O-Ring 6 in den Verbindungshülsenabschnitt 4a geschoben und in das Ende der zweiten Leitung 2 mit der Verbindungsmuffe 7 und einem weiteren O-Ring 8 in den Verbindungshülsenabschnitt 4b.

Zur Verbindung der Verbindungshülsenabschnitte 4a, 4b mit der ersten Leitung 1 als flexible Kunststoffleitung und mit der zweiten Leitung 2 als metallische Anschlussleitung sind aus den Verbindungshülsenabschnitte 4a, 4b Schlitzaufnahmen 9, 10 ausgeformt, die innen seitlich offen sind, siehe Figuren 1 und 2, jedoch außen seitlich geschlossen sind, siehe Figur 3.

Eine in Figur 3 erkennbare Öffnung auf der Oberseite der flach quaderförmigen Enden der Verbindungshülsenabschnitte verläuft im wesentlichen rechtwinklig zwischen den beiden in dieser Figur nicht gezeigten seitlichen Schlitzaufnahmen.

Nachdem die Enden der ersten Leitung 1 und der zweiten Leitung 2 in dem Verbindungsteil 4 unter Einschluss der O-Ringe 6, 8 eingeschoben sind, erfolgt die feste aber lösbare Verbindung durch Einschieben jeweils einer Federklammer 10 bzw. 11, in die Schlitzaufnahmen 8 bzw. 9. Die Federklammer wird mit ihrem offenen erweiterten Ende in die zugeordneten Schlitzaufnahmen 8 bzw. 9 ohne Werkzeug leicht eingeschoben und hält infolge der gewellten Formgebung ihrer beiden im wesentlichen parallelen Schenkel den Endabschnitt der ersten bzw. zweiten Leitung axial fixiert, wobei die Federklammer gegen die Verbindungsmuffe 5 bzw. 7 drückt und mit Hilfe des O-Rings 6 bzw. 8 eine fluiddichte Verbindung herstellt. Dabei liegt der O-Ring einerseits an einer nicht bezeichneten verbindungsseitigen Stirnseite der Verbindungsmuffe 5 bzw. 7 und andererseits an einer ebenfalls nicht bezeichneten Schulter an, an welcher der die beiden Verbindungshülsenabschnitte 4a und 4b verbindende Leitungsabschnitt 4c in einen die Verbindungsmuffe 5 bzw. 7 aufnehmenden Abschnitt größeren Innendurchmessers übergeht.

Hinsichtlich der Abdichtung sind die erste Ausführungsform gemäß Figur 1 und die zweite Ausführungsform gemäß Figur 2 gleichwirkend.

Beide Ausführungsformen zeichnen sich durch unkomplizierte, herstellungsgünstige Formgebung und problemlose Wiederverwendbarkeit im Wartungsfall aus.

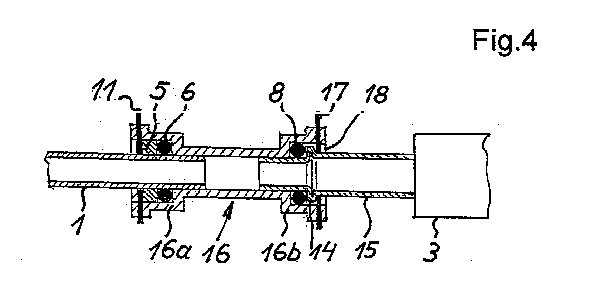

Noch signifikant herstellungsgünstiger ist die dritte Ausführungsform der Fluidleitungsverbindungsanordnung, die in Figur 4 gezeigt ist.

In ihr ist die in den ersten und zweiten Ausführungsformen auf die so bezeichnete zweite Leitung bzw. metallische Anschlussleitung des Durchlauferhitzers 3 oder eines entsprechenden Festteils aufgelötete Verbindungsmuffe aus Metall durch einen umlaufenden, das heißt ringförmigen Wulst 14 ersetzt, der durch einen Stauch-/Rollvorgang direkt aus der zweiten Leitung, hier 15, die eine starre metallische Anschlussleitung bzw. ein Anschlussrohr ist, ausgeformt. Die Anschlussleitung 15 bzw. das Anschlussrohr ist in dem durch den Stauch-/Rollvorgang bearbeiteten, nicht bezeichneten Endabschnitt links neben dem Wulst 15 verjüngt, und zwar auf den Innendurchmesser des Verbindungsteils 16. Dementsprechend ist der mit dem Durchlauferhitzer verbundene Abschnitt der metallischen Anschlussleitung 1 5 größer.

Wie aus Figur 4 ersichtlich, ist der Außendurchmesser des Wulstes 14 etwa so groß wie der mittlere Durchmesser des O-Rings 8, gegen den sich der Wulst 14 im gezeigten montierten Zustand der Fluidleitungsverbindungsanordnung direkt abstützt. Hierzu ist eine Federklammer 17 in eine Schlitzaufnahme 18 eines Verbindungshülsenabschnitts 16b eingesteckt. Die Federklammer 17 und die Schlitzaufnahme 18 sowie der Verbindungshülsenabschnitt 1 6b sind wie die Federklammer 12 bzw. die Schlitzaufnahme 10 und der Verbindungshülsenabschnitt 4b der ersten und zweiten Ausführungsformen ausgebildet, abgesehen davon, dass sie an den größeren Außendurchmesser der metallischen Anschlussleitung 15 angepasst sein können.

Im Übrigen sind Aufbau und Funktion des Verbindungsteils 16 mit dem Verbindungshülsenabschnitt 1 6a, das die erste Leitung 1 mit der zweiten Leitung 15 verbindet, die gleichen wie oben zu dem Verbindungsteil 4 und dem Verbindungshülsenabschnitt 4a der ersten Ausführungsform gemäß Figur 1 beschrieben, worauf hiermit ausdrücklich Bezug genommen wird. Letzteres gilt auch für die erste Leitung 1 mit der aufgelaserten Verbindungsmuffe 5 und deren Funktion zusammen mit dem O-Ring 6 und der Federklammer 11.

### Bezugszahlenliste

- 1: erste Leitung (flexible Kunststoffleitung)
- 2: zweite Leitung (metallische Anschlussleitung)
- 3: Durchlauferhitzer (Festteil)
- 4: Verbindungsteil
- 4a: Verbindungshülsenabschnitt
- 4b: Verbindungshülsenabschnitt
- 4c: Leitungsabschnitt
- 5: aufgelaserte Verbindungsmuffe aus Kunststoff
- 5': aufgequetschte Verbindungsmuffe aus Metall
- 6: O-Ring
- 7: aufgelötete Verbindungsmuffe aus Metall
- 8: O-Ring
- 9: Schlitzaufnahmen (Verbindungsmuffe-Aufnahmeschlitz)
- 10: Schlitzaufnahmen (Verbindungsmuffe-Aufnahmeschlitz)
- 11: Federklammer
- 12: Federklammer
- 13: Stützrohr (Gegendruckhülse)
- 14: Wulst
- 15: zweite Leitung (metallische Anschlussleitung)
- 16: Verbindungsteil
- 16a: Verbindungshülsenabschnitt
- 16b: Verbindungshülsenabschnitt
- 17: Federklammer
- 18: Schlitzaufnahme

## Patentansprüche

1. Fluidleitungsverbindungsanordnung mit einem Verbindungsteil (4), welches zwei äußere Verbindungshülsenabschnitte (4a, 4b) aufweist, aus denen jeweils innen eine ringförmige Schulter ausgebildet ist, und welches eine erste Leitung (1) aus flexiblem Kunststoff mit einer zweiten Leitung (2) verbindet, wobei jeweils auf einem durchgehend zylindrischen Endabschnitt der ersten Leitung (1) und der zweiten Leitung (2) in einem Abstand von einem Ende der ersten Leitung bzw. der zweiten Leitung eine Verbindungsmuffe (5, 7), die innen durchgehend zylindrisch ist und eine vordere ringförmige Stirnseite sowie eine hintere ringförmige Stirnseite aufweist, form- und kraftschlüssig anliegend aufgebracht ist, wobei an jedem der Verbindungshülsenabschnitte (4a, 4b) jeweils eine Federklammer (11, 12) als Arretierungselement lösbar anbringbar ist, welches durch jeweils innen seitlich offene Schlitzaufnahmen (9, 10) in einem der Verbindungshülsenabschnitte (4a, 4b) reicht und an der hinteren ringförmigen Stirnseite einer der in einen der Verbindungshülsenabschnitte eingesteckten Verbindungsmuffen (5, 7) anliegt, und
wobei jeweils ein O-Ring (6, 8) zwischen der ringförmigen Schulter jedes der Verbindungshülsenabschnitte (4a, 4b) und der vorderen ringförmigen Stirnseite einer der Verbindungsmuffen (5, 7) eingeschlossen ist,
**dadurch gekennzeichnet,**
**dass** die zweite Leitung (2) eine starre metallische Anschlussleitung eines Durchlauferhitzers (3) ist, auf die eine metallische Verbindungsmuffe (7) aufgelötet ist,
**dass** die Verbindungsmuffe (5) der ersten Leitung einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst und
**dass** die Verbindungsmuffe (5) auf den Endabschnitt der ersten Leitung (1) aus schweißbarem, insbesondere thermoplastischem Kunststoff gelasert ist.

2. Fluidleitungsverbindungsanordnung mit einem Verbindungsteil (4), welches zwei äußere Verbindungshülsenabschnitte (4a, 4b) aufweist, aus denen jeweils innen eine ringförmige Schulter ausgebildet ist, und welches eine erste Leitung (1) aus flexiblem Kunststoff mit einer zweiten Leitung (2) verbindet, wobei jeweils auf einem durchgehend zylindrischen Endabschnitt der ersten Leitung (1) und der zweiten Leitung (2) in einem Abstand von einem Ende der ersten Leitung bzw. der zweiten Leitung eine Verbindungsmuffe (5', 7), die innen durchgehend zylindrisch ist und eine vordere ringförmige Stirnseite sowie eine hintere ringförmige Stirnseite aufweist, form- und kraftschlüssig anliegend aufgebracht ist, wobei an jedem der Verbindungshülsenabschnitte (4a, 4b) jeweils eine Federklammer (11, 12) als Arretierungselement lösbar anbringbar ist, welches durch jeweils innen seitlich offene Schlitzaufnahmen (9, 10) in einem der Verbindungshülsenabschnitte (4a, 4b) reicht und an der hinteren ringförmigen Stirnseite einer der in einen der Verbindungshülsenabschnitte eingesteckten Verbindungsmuffen (5', 7) anliegt, und
wobei jeweils ein O-Ring (6, 8) zwischen der ringförmigen Schulter jedes der Verbindungshülsenabschnitte (4a, 4b) und der vorderen ringförmigen Stirnseite einer der Verbindungsmuffen (5', 7) eingeschlossen ist,
**dadurch gekennzeichnet,**
**dass** die zweite Leitung (2) eine starre metallische Anschlussleitung eines Durchlauferhitzers (3) ist, auf die eine metallische Verbindungsmuffe (7) aufgelötet ist,
**dass** in dem Endabschnitt der ersten Leitung (1) aus flexiblem Kunststoff ein Stützrohr (13) eingeschoben ist und
**dass** eine metallische Verbindungsmuffe (5') auf den Endabschnitt der ersten Leitung aufgequetscht ist.

3. Fluidleitungsverbindungsanordnung mit einem Verbindungsteil (16), welches zwei äußere Verbindungshülsenabschnitte (16a, 16b) aufweist, aus denen jeweils innen eine ringförmige Schulter ausgebildet ist, und welches eine erste Leitung (1) aus flexiblem Kunststoff mit einer zweiten Leitung (15) verbindet, wobei auf einem durchgehend zylindrischen Endabschnitt der ersten Leitung (1) in einem Abstand von einem Ende der ersten Leitung eine Verbindungsmuffe (5), die innen durchgehend zylindrisch ist und eine vordere ringförmige Stirnseite sowie eine hintere ringförmige Stirnseite aufweist, form- und kraftschlüssig anliegend aufgebracht ist, wobei auf einem Endabschnitt der zweiten Leitung (15) in einem Abstand von einem Ende der zweiten Leitung ein ringförmiges Verbindungselement (14) mit einer vorderen ringförmigen Stirnseite und einer hinteren ringförmigen Stirnseite angeordnet ist, wobei an jedem der Verbindungshülsenabschnitte (16a, 1 6b) jeweils eine Federklammer (11, 17) als Arretierungselement lösbar anbringbar ist, welches durch jeweils innen seitlich offene Schlitzaufnahmen (9, 18) in einem der Verbindungshülsenabschnitte (1 6a, 1 6b) reicht und an der hinteren ringförmigen Stirnseite der in einen (16a) der Verbindungshülsenabschnitte eingesteckten Verbindungsmuffe (5) anliegt bzw. des in den anderen Verbindungshülsenabschnitt (16b) eingesteckten Verbindungselements (14) anliegt, und
wobei jeweils ein O-Ring (6, 8) zwischen der ringförmigen Schulter jedes der Verbindungshülsenabschnitte (16a, 16b) und der vorderen ringförmigen Stirnseite der Verbindungsmuffe (5) bzw. des Verbindungselements (14) eingeschlossen ist,
**dadurch gekennzeichnet,**
**dass** die zweite Leitung (15) eine starre metallische Anschlussleitung eines Durchlauferhitzers (3) ist, aus deren Endabschnitt ein umlaufender Wulst (14) als ringförmiges Verbindungselement durch Stauch-/Rollbearbeitung ausgeformt ist.

4. Fluidleitungsverbindungsanordnung nach Anspruch 3,
**dadurch gekennzeichnet,**
**dass** der Außendurchmesser des aus dem Endabschnitt der starren Anschlussleitung (15) ausgeformten umlaufenden Wulstes (14) mindestens so groß ist wie der mittlere Durchmesser des O-Rings (8), an dem er mit seiner vorderen Stirnseite anliegt.

5. Fluidleitungsverbindungsanordnung nach Anspruch 3,
**dadurch gekennzeichnet,**
**dass** der Aussendurchmesser des umlaufenden Wulstes (14) ungefähr so groß ist wie der mittlere Durchmesser des O-Rings (8), an dem er mit seiner vorderen Stirnseite anliegt.

6. Fluidleitungsverbindungsanordnung nach einem der Ansprüche 3 - 5,
**dadurch gekennzeichnet,**
**dass** die Verbindungsmuffe (5) der ersten Leitung (1) einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst und
**dass** die Verbindungsmuffe (5) auf den Endabschnitt der ersten Leitung (1) aus schweißbarem, insbesondere thermoplastischem Kunststoff gelasert ist.

7. Fluidleitungsverbindungsanordnung nach einem der Ansprüche 3 - 5,
**dadurch gekennzeichnet,**
**dass** in dem Endabschnitt der ersten Leitung (1) aus flexiblem Kunststoff ein Stützrohr (1 3) eingeschoben ist und
**dass** eine metallische Verbindungsmuffe (5') auf den Endabschnitt der ersten Leitung aufgequetscht ist.

8. Fluidleitungsverbindungsanordnung nach einem der vorangehenden Ansprüche,
**dadurch gekennzeichnet,**
**dass** das die beiden Verbindungshülsenabschnitte (4a, 4b bzw. 16a, 16b) aufweisende Verbindungsteil (4 bzw. 16) ein Kunststoffspritzteil ist.

9. Fluidleitungsverbindungsanordnung nach einem der vorangehenden Ansprüche,
**dadurch gekennzeichnet,**
**dass** die Federklammer (11 bzw. 12 bzw. 17) annähernd U-förmig mit zwei im wesentlichen parallelen, gewellten Schenkeln ausgebildet ist, deren äußere Abschnitte eine sich nach innen verjüngende Öffnung bilden, an die sich nach innen eine Leitungsaufnahmeausbuchtung anschließt.

10. Fluidleitungsverbindungsanordnung nach einem der vorangehenden Ansprüche,
**dadurch gekennzeichnet,**
**dass** die Schlitzaufnahmen (9, 10, 18) der Verbindungshülsenabschnitte (4a, 4b, 16a, 16b) außen seitlich geschlossen sind.

11. Fluidleitungsverbindungsanordnung nach einem der Ansprüche 1 - 9,
**dadurch gekennzeichnet,**
**dass** die Schlitzaufnahmen der Verbindungshülsenabschnitte (4a, 4b, 16a, 16b) auch außen seitlich offen sind.

12. Fluidleitungsverbindungsanordnung nach einem der Ansprüche 1, 6 - 11,
**dadurch gekennzeichnet,**
**dass** die Materialien des ringförmigen Außenschlauchabschnitts und des ringförmigen Innenschlauchabschnitts der Verbindungsmuffe (5) auf dem gleichen laserstrahldurchlässigen Kunststoff basieren und dass der Kunststoff des ringförmigen Innenschlauchabschnitts zusätzlich laserstrahlabsorbierend modifiziert ist.

13. Fluidleitungsverbindungsanordnung nach Anspruch 12,
**dadurch gekennzeichnet,**
**dass** der Kunststoff des ringförmigen Innenschlauchabschnitts laserstrahlabsorbierend eingefärbt ist.

14. Fluidleitungsverbindungsanordnung nach Anspruch 13,
**dadurch gekennzeichnet,**
**dass** das thermoplastische Material des ringförmigen Innenschlauchabschnitts aus einem an sich laserstrahldurchlässigen Kunststoff besteht, in dem Russpartikel verteilt sind.

15. Fluidleitungsverbindungsanordnung nach Anspruch 14,
**dadurch gekennzeichnet,**
**dass** der Gewichtsanteil der Russpartikel in dem Kunststoff des ringförmigen Innenschlauchabschnitts 1 - 2 % beträgt.

16. Fluidleitungsverbindungsanordnung nach einem der Ansprüche 1, 6, 12 - 15,
**dadurch gekennzeichnet,**
**dass** die Wanddicke des ringförmigen Innenschlauchabschnitts 0,2 - 0,3 mm beträgt.
